# EUROPEAN PATENT APPLICATION

(11) **EP 3 006 191 A1**
(43) Date of publication of application: **13.04.2016**
(21) Application number: 14187974.2
(22) Date of filing: 07.10.2014
(51) Int. Cl.: B29C 67/00

(54) **Longitudinal construction element**

(71) Applicant: Kapsch TrafficCom AG, 1120 Wien (AT)
(72) Inventor: Nagy, Oliver, 1190 Wien (AT); Gärtner, Andreas, 1130 Wien (AT)
(74) Representative: Weiser, Andreas

(57) **Abstract**

The present invention relates to a longitudinal construction element (1), comprising a generally-cylindrical mantle (2) made of a synthetic composite material, and a core (3) sheathed by the mantle (2), the core (3) having a plurality of chambers (4) extending in the longitudinal direction (L) of the element (1), wherein the chambers (4) are delimitated by intermediate walls (5) deposited successively in layers by means of a 3D-printing process.

## Description

The present invention relates to a longitudinal construction element. Such elements can be used as beam structures which are horizontally mounted and supported at one or both ends, as poles vertically supporting loads, as struts diagonally spanning between beams or poles, or for creating rigid frames of poles and beams in, e.g., the construction of houses, bridges or similar.

While a use of steel or armoured concrete for such construction elements is very common for reasons of their simplicity, rigidity and standardisation, these materials are very massive and weighty. If, for example, a gantry spanning a highway for collecting road toll shall be built from steel or armoured concrete according to the state of the art, the required foundations are extensive as both the poles and the horizontal beam have to be very massive for avoiding tilting or tumbling even when a large truck collides therewith. Consequently, the weight of the beam is far beyond the weight of all components possibly mounted thereon resulting in an inefficient construction which mainly supports itself. Due to the massiveness of such a gantry both its construction and maintenance as well as the maintenance of the components mounted thereon is extensive, requiring huge construction site equipment and temporary road closures.

It is an object of the invention to provide a longitudinal construction element which is lightweight and still rigid, easy to handle and mount and can be produced in customised length and cross-section while offering a better ratio between weight of the element itself and components to be mounted thereon.

This object is achieved with a longitudinal construction element comprising:
a generally-cylindrical mantle made of a synthetic composite material, and
a core sheathed by the mantle, the core having a plurality of chambers extending in the longitudinal direction of the element,
wherein the chambers are delimitated by intermediate walls deposited successively in layers by means of a 3D-printing process.

Such a construction element is highly rigid while lightweight and can be produced in any predefined length and diameter. As the mantle sheathes the core, the two are friction-locked in the longitudinal direction and form-locked in the two cross-sectional directions, whereby mantle and core support each other. By variation of the materials and physical shapes of the mantle and the core, rigidity and weight of the element can meet the requirements in a wide range.

In an advantageous embodiment, the synthetic composite material is a fibre-reinforced plastic material, preferably a glass-fibre or carbon-fibre reinforced polymer. Mantles made from such materials are available off-the-shelf in a multitude of shapes, diameters and lengths and can be adapted for combining with a conformed core easily. On the other hand, such materials can also be conformed to a core for curing thereon. These materials are particularly rigid and lightweight and have a high tensile strength.

In an alternative embodiment, the synthetic composite material is an epoxy granite. This yields a stiff and lightweight mantle; it particularly has excellent long-term durability and intrinsic vibration damping due to its high damping factor.

For achieving high resistance to lateral forces, particularly bending forces, the chambers preferentially have a substantially triangular or hexagonal cross-section.

In a favourable embodiment, each chamber penetrates the core in said longitudinal direction end-to-end. Thereby, longitudinal chambers are created which can be used for longitudinally conducting, e.g. gaseous or liquid, media, signals and/or energy, and the weight of intermediate cross-sectional walls is saved.

For further improving mechanical stability, rigidity and vibration suppression over the whole cross-section, it is preferred that the cross-sections of the chambers are substantially congruent to one another. The resulting regular arrangement of intermediate walls facilitates a quick and efficient production of the core by 3D-printing several intermediate walls simultaneously. Moreover, for optimal transmission and coupling of forces between mantle and core, the cross-section of the mantle can be a scale-up of the cross-section of each chamber.

Advantageously, further chambers are delimitated between some of the intermediate walls and the mantle. This facilitates an insertion of the core into the mantle. Moreover, a regular arrangement of the intermediate walls can be maintained to the point of contact with the mantle; the entire core having no structural changes leads to consistent physical characteristics of the core and consequently of the whole construction element. If, on the other hand, the further chambers are created by intermediate walls which are, for instance, approximately orthogonal to the nearest section of the mantle in cross-sectional view, this leads to a straight lateral support of the core on the mantle.

In a favourable embodiment, said layers of the intermediate walls are deposited in the longitudinal direction of the element. The production process can thereby be simplified as the deposition of each layer is an entirely repetitive process.

For a good ratio of rigidity versus weight of the construction element, it is preferred that the diameter of the mantle is at least a fivefold of the diameter of any chamber and/or that the diameter of each chamber is at least a fivefold of the thickness of any delimitating intermediate wall.

The invention will now be described in further detail by means of exemplary embodiments thereof under reference to the enclosed drawings in which:
Fig. 1 shows an embodiment of a longitudinal construction element according to the invention in a perspective view;
Figs. 2a and 2b show two exemplary embodiments of a 3D-printer for producing a core of the longitudinal construction element of Fig. 1, the 3D-printers having a one-piece (Fig. 2a) or a segmented (Fig. 2b) revolvable print head, in a schematic perspective view;
Figs. 3 and 4 schematically depict movements of a print head of the 3D-printer of Figs. 2a or 2b during the production process of the core in a top view;
Figs. 5 and 6 show exemplary embodiments of the longitudinal construction element of Fig. 1 in a cross-sectional view;
Figs. 7 to 9 show different embodiments of a gantry for a road toll system using the longitudinal construction element of Fig. 1 in a perspective view aslant from above (Figs. 7 and 9) and in a top view (Fig. 8); and
Fig. 10 shows details of an interlock of the gantries of Figs. 7 to 9 in a sectional view along the longitudinal construction element.

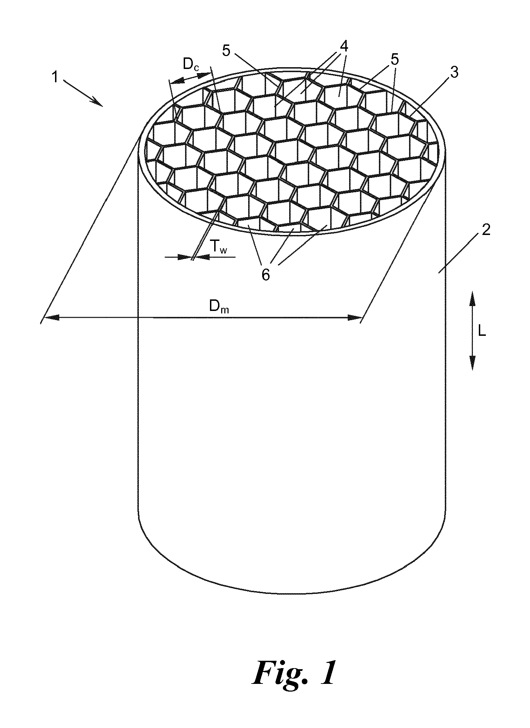

A longitudinal construction element 1 according to Fig. 1 for use in lightweight constructions has a generally-cylindrical mantle 2 made of a synthetic composite material and a core 3 which is sheathed by the mantle 2. The core 3 has a plurality of chambers 4 which extend in the longitudinal direction L of the element 1. The chambers 4 are delimitated by intermediate walls 5 deposited successively in layers by means of a 3D-printing process. The layers can either be deposited in the longitudinal direction L of the construction element 1, perpendicular, or even aslant thereto at any angle, as will be explained in detail further down.

The term "generally-cylindrical" comprises all those forms of cross-sections which are extended - linearly from an arbitrary 2D-shape into the third dimension in the manner of a general geometrical cylinder - over the longitudinal direction L.

In the example of Fig. 1, the mantle 2 is formed as a circular cylinder. However, the cross-section of the mantle 2 could also have a different form, for example oval, polygonal, e.g. substantially square (possibly with rounded corners), etc. In addition, the thickness of the mantle 2 could vary along its circumference, e.g. it could be thicker at potential corners.

The chambers 4 of the core 3 in the example of Fig. 1 have a substantially hexagonal cross-section and are substantially congruent to one another, whereby the intermediate walls 5 are regularly arranged. Alternatively, the chambers 4 could also be substantially triangular, quadrangular, in particular square, or of different regular or even irregular form. Moreover, different chambers could also have cross-sections which differ from one another, e.g. mixing octagons with intermediate squares, thereby resulting in an arrangement of the intermediate walls 5 which is either regular or even irregular. Of course, the chambers 4 in one part of the cross-section of the element 1, e.g. in the centre or at one side, could also differ in their diameter D_{c} from chambers 4 elsewhere, thereby reducing the weight of the core 3 while maintaining rigidity where needed.

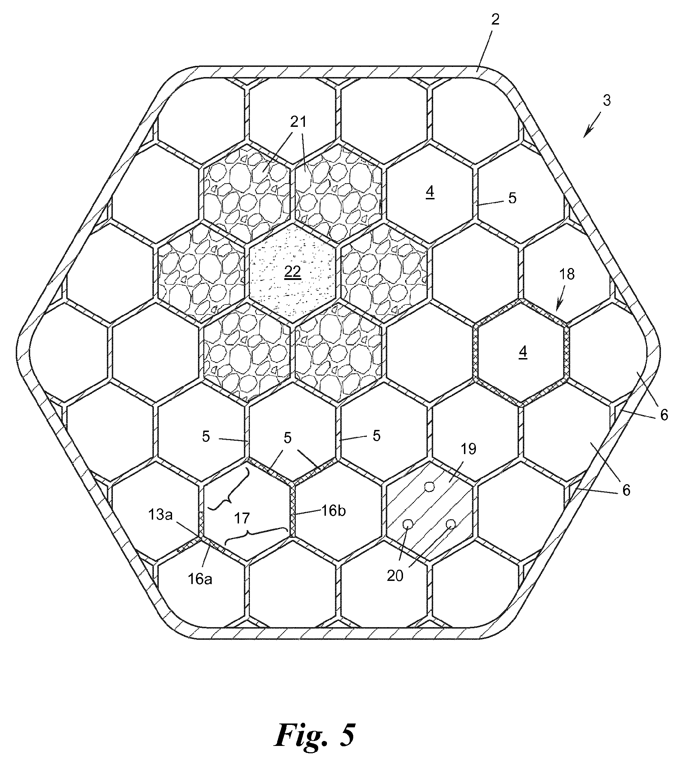

When the chambers 4 are congruent to one another the cross-section of the mantle 2 can optionally be a scale-up of the cross-section of each chamber 4, as shown in Fig. 5.

In the exemplary construction element 1 of Fig. 1 the diameter Dₘ of the mantle 2 is more than a fivefold of the diameter D_{c} of any of the chambers 4, and the diameter D_{c} of each chamber 4 is more than a fivefold of the thickness T_{w} of any delimitating intermediate wall 5. These relations can be altered to meet different requirements of specific applications in terms of weight and/or rigidity of the construction element 1.

Each chamber 4 of the construction element 1 of Fig. 1 penetrates the core 3 in the longitudinal direction L of the element 1 end-to-end, for example for longitudinally conducting, e.g. gaseous or liquid, media. In other embodiments, the chambers 4 could alternatively be delimitated in the longitudinal direction L of the element 1, e.g. at both ends of the longitudinal construction element 1 or by in-between walls similar to the intermediate walls 5 but substantially orthogonal to the direction L.

For fitting the core 3 into the mantle 2, or, likewise, for sheathing the mantle 2 closely around the core 3, specifically if the chambers 4 and the mantle 2 differ from one another in the form of their cross-sections, further (outer) chambers 6 are delimitated between some of the intermediate walls 5 and the mantle 2. In this way, the further (outer) chambers 6 are actually fractions of the (inner) chambers 4 if the intermediate walls 5 are regularly arranged. In an alternative embodiment, such further chambers 6 could, for example, also be created by intermediate walls 5 approximately orthogonal to the nearest section of the mantle 2 when seen in cross-sectional view.

When considering the core 3 without its sheathing mantle 2 as shown in Fig. 5, the further chambers 6 at the core's cross-sectional circumference are formed by the intermediate walls 5 and are open outwards in radial direction of the core 3.

The mantle 2 can be made of any suitable synthetic composite material, for example a fibre-reinforced plastic material. In the embodiment according to Fig. 1, the mantle 2 is made of a glass-fibre or carbon-fibre reinforced polymer. It could alternatively be made of an epoxy granite.

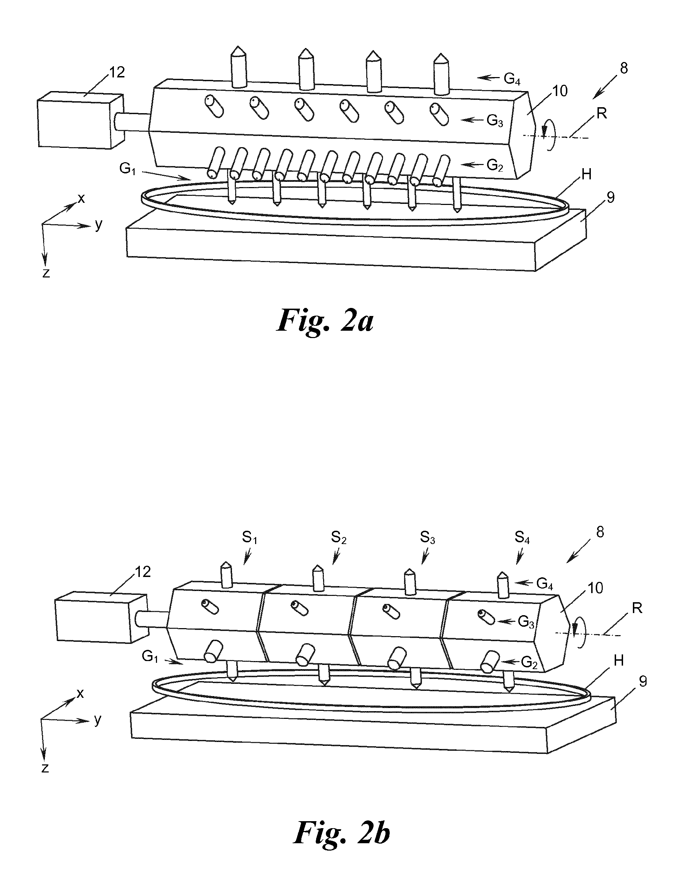

By means of the examples illustrated in Figs. 2 to 4 a method of producing the core 3 for the construction element 1 shall now be exemplified. This method can be used to produce a core 3 having, for matching a construction element 1, a longitudinal generally-cylindrical form and a cross-section with a repeating pattern 7 of polygon chambers 4 delimitated by intermediate walls 5, as per the exemplary embodiment of Fig. 1.

For said method, a 3D-printer 8 for producing the core 3, layer-by-layer, is provided. The 3D-printer 8 has a base 9 for supporting curable material deposited thereon. In the example of Figs. 2a and 2b, the base 9 is movable in the vertical direction z corresponding to the longitudinal direction L of the core 3, as will be explained in detail further down.

The 3D-printer 8 comprises a print head 10 which is movable across the base 9, i.e. in the two horizontal directions x, y in the present example. The print head 10 has two or more print nozzles 11 extending therefrom which deposit the material on the base 9 or on a previously deposited layer of material, respectively. Print head 10 and print nozzles 11 are controlled by a controller 12, not shown in greater detail, which might also contain one or more reservoirs for material to be deposited.

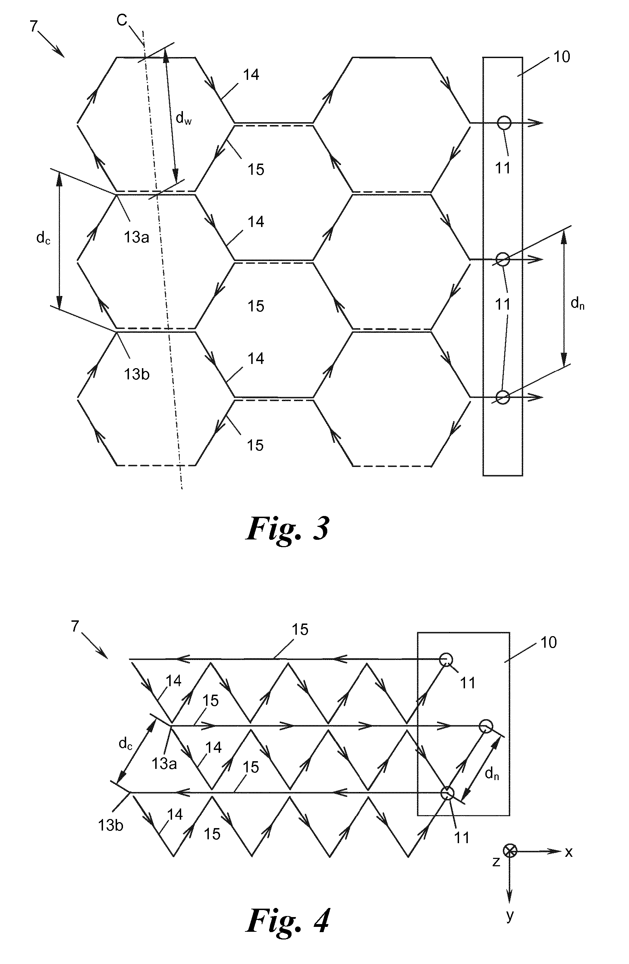

For the step of depositing material, the print head 10 with the print nozzles 11 is adequately distanced in vertical direction z from the base 9 (or the previously deposited layer of material thereon); and a layer of material is then deposited from at least two of the print nozzles 11 simultaneously while the print head 10 with its print nozzles 11 moves in horizontal direction x, y along the repeating pattern 7 (Figs. 2a, 2b and 3) to form the polygon chambers 4 of the core 3. To this end, the print nozzles 11 engaged in this step of depositing have a mutual distance dₙ on the print head 10 corresponding to a distance d_{c} between two corners 13a, 13b of the polygon chambers 4.

It is understood that the 3D-printer 8 does not necessarily have to be arranged as shown in Figs. 2a and 2b, whereby horizontal and vertical directions x, y, z of the 3D-printer 8 as described above do not necessarily coincide with real-world horizontal and vertical directions.

The print head 10 can optionally be revolver-type, as shown in the example of Fig. 2a, being turnable ("revolvable") around an axis R for example, which axis R can have any appropriate orientation. In this case, the print nozzles 11 are arranged in at least two groups G₁, G₂, ..., generally Gᵢ, on the print head 10, each group Gᵢ comprising at least two print nozzles 11. During the step of depositing, the print head 10 is revolved, e.g. controlled by the controller 12, to bring one of said groups Gᵢ of print nozzles 11 at a time into a position for depositing. The print nozzles 11 of different groups Gᵢ can optionally differ in number, their mutual distances dₙ and/or the material to be deposited therewith, which is depicted by the different diameters of the print nozzles 11 in Fig. 2a.

According to the example of Fig. 2b, the print head 10 can also be segmented, wherein each segment S₁, S₂, ..., generally Sᵢ, carries at least one print nozzle 11 and is separately revolvable around the axis R. In this case, during the step of depositing, the segments Sᵢ can be revolved if necessary to arrange predetermined print nozzles 11 in a group Gᵢ and bring said group Gᵢ into a position for depositing. The print nozzles 11 can thereby be arranged in mutational groups Gᵢ of potentially dissimilar print nozzles 11 depositing, e.g., different materials as desired.

Said steps of depositing and moving can both be executed continuously, i.e. by the print head 10 moving non-intermittently and the print nozzles 11 depositing non-intermittently, or gradually, i.e. by the print head 10 alternatingly moving and stopping and the print nozzles 11, while stopped, depositing a droplet of material, or even in an amalgamation of these two options.

Likewise, the movement of the print head 10 can for example follow a forward path 14 according to Figs. 3 and 4 substantially from one side of the base 9 to the other, depositing a layer of only some of the intermediate walls 5 first, and afterwards follow a backward path 15 substantially in the other direction, depositing a layer of material of the remaining intermediate walls 5 of the pattern 7 next. Where forward and backward paths 14, 15 coincide, the deposition can either be interrupted in one of the two directions (as symbolised by the dashed lines in the backward path 15 of Fig. 3) or the speed of movement can be increased to achieve a deposition of a thinner layer in each direction, adding up to a full size layer thickness.

Alternatively, the print head 10 could also be controlled so as to deposit a layer of material of the intermediate walls 5 chamber-by-chamber 4 (not shown). However, as at least two print nozzles 11 are engaged at a time, a layer of material of at least two intermediate walls 5 is deposited simultaneously at two positions of the pattern 7 at least.

If necessary, the steps of depositing and moving can be repeated for the same layer of material for other intermediate walls 5 at positions of the pattern 7 which were not deposited during a previous run.

When the deposition of a new layer of material is completed, the base 9 and the print head 10 are distanced from one another in the longitudinal direction L (i.e. the vertical direction z) of the core 3 by the thickness of one completed layer, in a next step. In the embodiment of Figs. 2a and 2b, the base 9 movable in vertical direction z is distanced from the print head 10 and its nozzles 11; alternatively, base 9 could be fixed, in which case the print head 10 (with its print nozzles 11) would be movable to distance from the base 9.

For producing a core 3 of a predetermined length in the longitudinal direction L, the steps of depositing and distancing are repeated in the examples of Figs. 2 to 4 until the core 3 reaches said length.

In the examples of Figs. 3 and 4 the chambers 4 are substantially congruent to one another and have a hexagonal (Fig. 3) or triangular (Fig. 4) cross-section. Of course, chambers 4 of different cross-sectional form, as previously exemplified, can be produced with the illustrated method, as well as repeating patterns 7 of non-congruent chambers 4 and their intermediate walls 5.

Notwithstanding the examples of Figs. 2 to 4, the core 3 can alternatively be produced using essentially the same method but depositing layers of material in a direction other than said longitudinal direction L of the core 3, i.e. perpendicular or aslant thereto, when at least two intermediate walls 5 are arranged in parallel to each other with the chambers 4 not necessarily having a polygonal cross-section. In these cases, the print nozzles 11 which deposit material in the step of depositing have a mutual distance dₙ which, more generally, corresponds to a distance d_{w} between said parallel intermediate walls 5. This distance d_{w} is not necessarily the shortest distance between said intermediate walls 5 but a distance that can be measured in any longitudinal cross-section C of the core 3 (Fig. 3). Moreover, the print head 10 is moved across the base 9, during the step of depositing; and in the step of distancing, the base 9 and the print head 10 are distanced from each other by the thickness of one layer. The steps of depositing and distancing are then repeated until the core 3 reaches a predetermined size.

In the more specific case of depositing layers of material perpendicular to the longitudinal direction L, the print head 10 is substantially moved along the longitudinal direction L of the core 3 while depositing a layer, said cross-section C constituting a potential 3D-printing plane, and the base 9 and the print head 10 are then distanced perpendicular to the longitudinal direction L by the thickness of one layer, these steps being repeated, in this case, until the core 3 reaches a predetermined cross-sectional diameter.

Moreover, the 3D-printer 8 can also comprise more than one print head 10, all of which print heads 10 are movable simultaneously across the base 9 while depositing material from their respective print nozzles 11. Thereby, in the examples of Figs. 3 and 4, the forward path 14 can be followed by the first print head 10 and path 15 (originally the backward path) could be followed by a second print head (not shown), both print heads moving substantially in the same direction (here: the forward direction) next or successively to each other.

In the examples of Figs. 2 to 4, the curable material deposited is a thermoplastic. For controlling the temperature of the layer of thermoplastic material being deposited, the 3D-printer 8 can optionally comprise at least one thermally controllable heating element H. Such a heating element could be a source of microwaves, infrared or similar energy waves or warm air being directed at the deposited material as such or at the layer being deposited, respectively. The heating element H can either be fixed with respect to the base 9 or the print head 10 or, preferably, is separately movable, e.g. for distancing from the base 9. Furthermore, the heating element H could be split into a fixed and a movable portion, which portions together effect the control of the layer's temperature.

Instead of a thermoplastic curing by cooling down, a synthetic material curable by at least two energy beams, e.g. by light beams, could be deployed. In this case, the step of depositing a layer of material would rather be a step of curing said layer in a tub of liquid material, as known to the person skilled in the art, the term "depositing" as used herein also comprising these variants. In such a process the material can either be cured ("deposited") on the upper surface or at the bottom of the tub. In the latter case the base 9 would be on top of the print head 10, pulling the 3D-printed core 3 out of the tub, while the exposure to the curing light beams would be from below via a transparent window are the bottom of the tub.

As a further alternative embodiment, other self-curing synthetic materials, e.g. two-component plastics, could be deployed for depositing.

As mentioned here above, the method can equally be used for depositing at least two different materials, each from a different print nozzle 11, wherein said different print nozzles 11 are arranged either on one print head 10, e.g. in different groups Gᵢ, and are fed with the at least two different materials, or on at least two different print heads 10, where applicable, wherein one and the same material is deposited from all print nozzles 11 of one and the same print head 10.

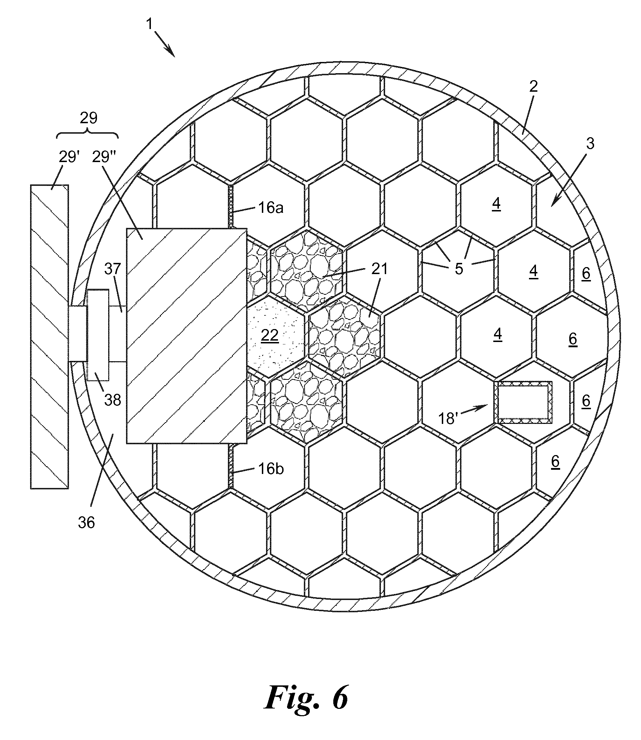

Referring to Figs. 5 and 6, further variations of the method aimed at producing a multi-functional core 3 for the construction element 1 shall be explained.

For producing a core 3 with at least one cross-sectional area 16a, 16b of the intermediate walls 5 made of electrically, optically or thermally conductive material throughout the longitudinal direction L of the core 3, such conductive material is deposited, similarly as described above, layer-by-layer in said longitudinal direction L, perpendicular or aslant thereto in such at least one cross sectional area 16a, 16b. In case of two or more areas 16a, 16b these are separated from one another by non-conductive cross-sectional areas 17 deposited therebetween. Any cross-sectional area of the intermediate walls 5 can thereby be made electrically, optically, or thermally conductive in the longitudinal direction L of the core 3. The areas 16a, 16b can comprise, e.g., a set of intermediate walls 5 which delimitate one chamber 4, i.e. define a "loop" 18 in the cross-section of the core 3, or which meet each other in the form of a "star" at a corner 13a, 13b between intermediate walls 5 of adjacent chambers 4.

In addition or alternatively, inside at least one of the chambers 4 - see exemplary chamber 19 in Fig. 5 - a non-conductive material and at least one electrical or optical conductor 20 can be embedded therein by depositing appropriate materials. Thereby, the chamber 19 is filled, end-to-end, with non-conductive material which itself is penetrated by the electrical or optical conductor(s) 20. Via the electrically, optically, or thermally conductive material or conductor(s) 20, control signals and/or supply energy, i.e. electrical, optical and/or thermal energy, can be transmitted from one end of the longitudinal construction element 1 to the other and/or any place therebetween.

Similar to the loop 18, a separate chamber 18' (Fig. 6) can optionally formed by intermediate walls 5. The separate chamber 18' in this example has a cross-section which differs both in size and in form from the cross-sections of other chambers 4 and constitutes one of said conductive cross-sectional areas 16a, 16b of the core 3. Additionally or alternatively, the intermediate walls 5 forming said separate chamber 18' can be internally coated with electrically conductive material in a separate step.

Such a separate chamber 18' can, e.g., be used as a waveguide for transmission of electromagnetic waves in longitudinal direction L of the construction element 1. Waveguides usually have a rectangular cross-section but could alternatively be circular or elliptic in cross-section. The cross-sectional size and form of the waveguide are determined by the frequency of the electromagnetic wave to be transmitted. The separate chamber 18' can therefore be smaller in size than other chambers 4 of the core 3, e.g. for transmitting electromagnetic waves in a millimetre wave range (50 - 100 GHz), as the example of Fig. 6 shows, but it could alternatively have a larger cross-section and extend over several chambers 4. In both cases, the separate chamber 18' can be formed of only separate intermediate walls (not shown) or use at least one intermediate wall 5 of the core's structure. Such waveguides are preferably used in basic mode operation, i.e. at its cutoff frequency. By way of example, for transmission frequencies between 60 GHz and 90 GHz, a proper rectangular waveguide has dimensions of 3 mm x 1.5 mm.

It is further possible to deposit a thermal insulation inside at least one of the chambers 4, see exemplary chamber 21 in Fig. 6, thereby filling this chamber 21. Such an insulation could for example be a foam, either deposited using the same material as for the intermediate walls 5, e.g. by depositing a plurality of additional walls confining small gaseous bubbles inside said chamber 21, or a different material, e.g. from a separate foam nozzle 11. Alternatively, at least one of the chambers (not shown) can be sealed at both ends and evacuated.

As shown in the examples of Figs. 5 and 6, such chambers 21 filled with a thermal insulation, like otherwise evacuated chambers, can be arranged around an inner chamber 22 - or around an area 16a, 16b of thermally conductive material - to be thermally insulated, wherein the inner chamber 22 can be used for conducting a cooling or heating fluid, the fluid being either gaseous or liquid.

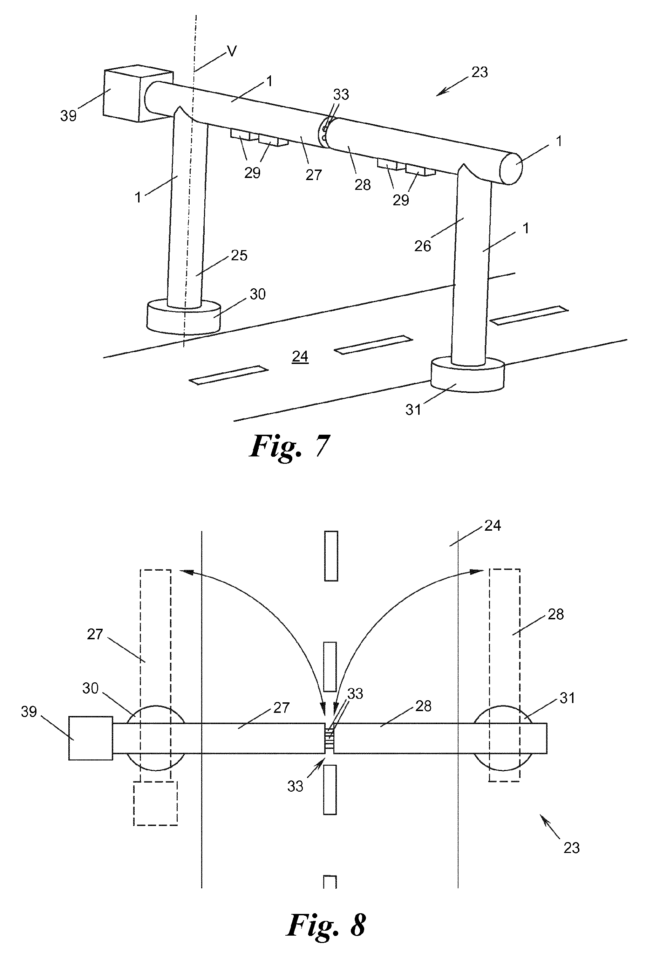

On the basis of Figs. 7 to 10 a sample application for the longitudinal construction element 1 will now be illustrated in detail.

Figs. 7 to 10 show different embodiments of a gantry 23 for spanning a traffic area 24, e.g. a road, the entrance of a car park, or another exposed location where accessibility is monitored or limited. The gantry 23 has two poles 25, 26, each pole 25, 26 having an arm 27, 28 projecting laterally at the top of the respective pole 25, 26. The arms 27, 28 can be used for mounting components 29 thereon. Examples for such components 29 are traffic lights, traffic signs, cameras, displays and road toll equipment.

The poles 25, 26 and arms 27, 28 of the gantry 23 are each manufactured from the longitudinal construction element 1, which is a lightweight construction of synthetic material with hollow chambers 4 as extensively illustrated herein above.

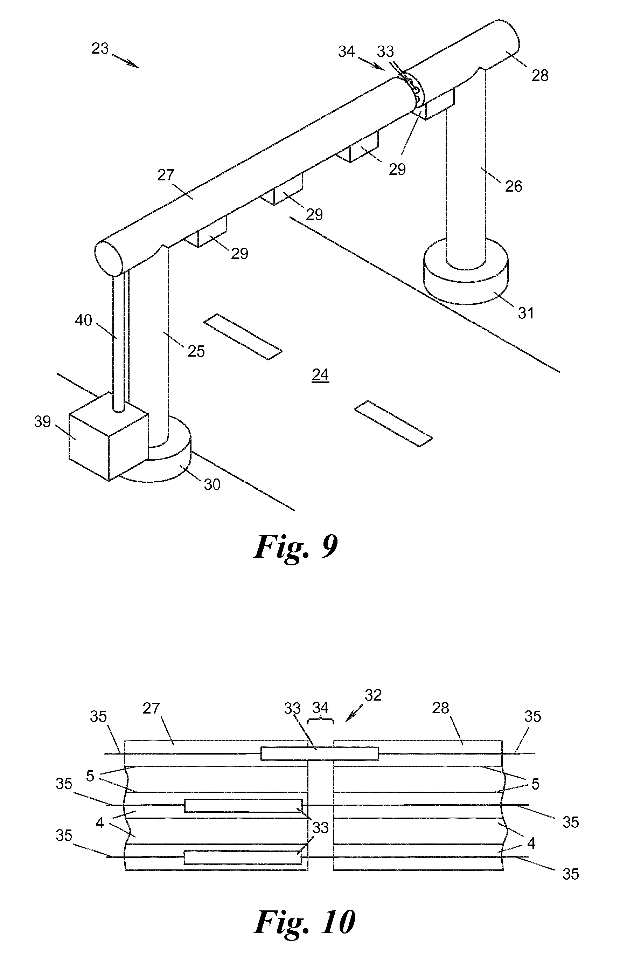

In the examples of Figs. 7 to 10 the diameters of the poles 25, 26 and arms 27, 28, respectively, are similar; alternatively each pole 25, 26 and/or each arm 27, 28 could have a different diameter. Moreover, the arms 27, 28 could be essentially equal in their longitudinal direction (Fig. 7) or one arm 27 could be considerably longer than the other arm 28 (Fig. 9) .

At least one of said poles 25, 26 has a pivot 30, 31 for swivelling the arm 27, 28 projecting from said pole 25, 26 around an essentially vertical axis V between a first position (depicted in solid lines in Figs. 7 to 9), in which the arms 27, 28 are aligned with each other, thereby spanning the traffic area 24, and a second position (depicted in dashed lines in Fig. 8), in which the arms 27, 28 are swivelled away from the traffic area 24 for, e.g., service or maintenance alongside the traffic area 24.

In the example of Fig. 8 each of the poles 25, 26 is equipped with a pivot 30, 31 and both arms can be swivelled between said two positions. If, alternatively, only one pole 25 would be equipped with a pivot 30 the fixed arm 28 of the other pole 26 would preferentially be the shorter of the two arms 27, 28, as per the example of Fig. 9.

The pivots 30, 31 can either be located at the top of the poles 25, 26, for solely swivelling the arms 27, 28. However, in the embodiments of Figs. 7 and 9, the pivots 30, 31 are located at the bottom of the respective pole 25, 26 for anchoring on the ground and swivelling each pole 25, 26 together with the arm 27, 28 projecting therefrom.

Optionally, at least one of the two arms 27, 28 - in the example of Fig. 10 the left arm 27 - has a releasable interlock 32 for engaging said arm 27 with the respective other arm 28 when in said first position. In one embodiment, the interlock 32 can be configured as a sleeve to be pushed over the respective other arm 28 when in said first position and be pulled away for free swivelling. In an alternative embodiment, the interlock 32 can be composed of a first interlocking element arranged at the projecting end of one arm 27 and a second interlocking element arranged at the projecting end of the other arm 28 and corresponding to the first interlocking element, like a dovetail joint, mutually latching conical elements, guide rails, guide rings, or a magnetic clutch. First and second interlocking elements can be releasably engaged when the arms 27, 28 are in said first position.

The interlock 32 could either contain or consist of alignment pins 33 which are movable in the longitudinal direction of the arm 27, 28, bridging a gap 34 between the two arms 27, 28 when in said first position.

Preferably, the interlock 32 and/or the alignment pins 33 are remotely controllable and moved, for example by means of a controlled motor or solenoid. Alternatively, the alignment pins 33 could be controlled and moved by means of filaments 35, wires or bowden cables (not shown) which themselves run inside the chambers 4 of the two arms 27, 28, interlocking the arms 27, 28 in said first position by pulling in one direction and disengaging by pulling in the other. In some cases where each of the filaments 35 is connected to one end of an alignment pin 33 and runs inside a chamber 4 of the respective arm 27, 28 to be aligned, the filaments 35 may stay stretched between the two arms 27, 28 also in said second position, thereby spanning the traffic area 24.

As the example of Fig. 6 shows, the longitudinal construction element 1 of the poles 25, 26 and arms 27, 28, comprising the mantle 2 and core 3, can optionally be produced in a way wherein, in at least one area 36 inside the mantle 2, intermediate walls 5 are omitted at least over a section of its length for housing and/or mounting the components 29 or parts thereof. In the embodiment of Fig. 6, the component 29 is a camera, the electronic system 29' of which is housed in said area 36 inside the mantle 2, whereas the outside optical system 29" is mounted thereon by means of a bolt 37 and a nut 38, the bolt 37 penetrating the mantle 2, while the nut 38 being located inside the mantle 2. In this embodiment, the bolt 37 also connects the optical system 29" to the electronic system 29' of the camera.

A supply and control system 39 which can be carried by one of the poles 25, 26 or arms 27, 28, respectively, controls and/or supplies the components 29 via electrically, optically, or thermally conductive material in one or more of the conductive cross-sectional areas 16a, 16b which, e.g., extends up to the omitted area 36. Additionally or alternatively, conductors 20 as shown in Fig. 5 could also supply and/or control the components 29. For example, the electronic representation of an image shot by the camera could be transferred via optical conductors 20 to the supply and control system 39.

The electronic system 29' of the component 29 could additionally be cooled or heated by the supply and control system 39 providing cold and/or hot fluid, e.g. cooling air, which is conveyed through the inner chamber 22 surrounded by chambers 21 filled with thermal insulation or evacuated, thereby keeping the air flow cool.

When the supply and control system 39 is carried on an arm 27, 28 (Figs. 7 and 8) it can connect directly to electrically, optically and/or thermally conductive material, to conductors 20 of the core 3, or to the inner chambers 22, thereby guiding control signals, electrical, optical and/or thermal supply energy and/or a (gaseous or liquid) cold or hot fluid throughout the longitudinal direction of the respective arm 27, 28. Otherwise, the supply and control system 39 can be carried by a pole 25, 26 (Fig. 9) and connected to the arm 27, 28 either via a connecting member 40 or using similar electrically, optically and/or thermally conductive material, conductors 20 or inner chambers 22 inside the poles 25, 26 by being electrically, optically and/or thermally connected to the respective material, conductors 20, or inner chambers 22 of the arms 27, 28.

Such a supply and control system 39 can either be assigned to each of the poles 25, 26 or arms 27, 28, or, preferably, only one of the poles 25, 26 or arms 27, 28 carries a supply and control system 39. In the latter case the alignment pins 33 of the interlock 32 are configured to electrically, optically and/or thermally connect one arm 27 to the other arm 28 when interlocking. The alignment pins 33 may then be connected to said conductive areas 16a, 16b or conductors 20, respectively, linking the arms 27, 28 and the components housed therein and/or mounted thereon with the common supply and control system 39.

For thermally connecting the two arms 27, 28 one or more alignment pins 33 can, for example, be a pipe in order to form a thermal bridge between the arms 27, 28 or their inner chambers 22 for piping the cooling or heating fluid over the gap 34.

Moreover, the longitudinal construction element 1 can optionally be used solitarily for mounting or housing components 29, i.e. without an arm 27, 28 projecting therefrom. In this case, it can again optionally have areas 36 of omitted intermediate walls 5 inside the mantle 2 and/or a supply and control system 39 carried by or connected to the construction element 1. Such a construction element 1 can, for example, be a pole or beam for carrying a traffic sign, a traffic light, a camera, an antenna or the like, wherein, e.g., an amplifier could be housed inside the construction element 1 and the supply and control system 39 could be mounted at the base and linked to the amplifier and the components 29 via the electrically, optically and/or thermally conductive material of cross sectional areas 16a, 16b, the conductors 20, or said inner chambers 22.

The invention is not limited to the specific embodiments described in detail above but encompasses all variants, modifications and combinations thereof which fall into the scope of the appended claims.

## Claims

1. A longitudinal construction element, **characterized by** a generally-cylindrical mantle (2) made of a synthetic composite material, and
a core (3) sheathed by the mantle (2), the core (3) having a plurality of chambers (4) extending in the longitudinal direction (L) of the element (1),
wherein the chambers (4) are delimitated by intermediate walls (5) deposited successively in layers by means of a 3D-printing process.

2. The construction element according to claim 1, **characterized in that** the synthetic composite material is a fibre-reinforced plastic material, preferably a glass-fibre or carbon-fibre reinforced polymer.

3. The construction element according to claim 1, **characterized in that** the synthetic composite material is an epoxy granite.

4. The construction element according to any one of the claims 1 to 3, **characterized in that** the chambers (4) have a substantially triangular or hexagonal cross-section.

5. The construction element according to any one of the claims 1 to 4, **characterized in that** each chamber (4) penetrates the core (3) in said longitudinal direction (L) end-to-end.

6. The construction element according to any one of the claims 1 to 5, **characterized in that** the cross-sections of the chambers (4) are substantially congruent to one another.

7. The construction element according to claim 6, **characterized in that** the cross-section of the mantle (2) is a scale-up of the cross-section of each chamber (4).

8. The construction element according to any one of the claims 1 to 7, **characterized in that** further chambers (6) are delimitated between some of the intermediate walls (5) and the mantle (2).

9. The construction element according to any one of the claims 1 to 8, **characterized in that** said layers of the intermediate walls (5) are deposited in the longitudinal direction (L) of the element (1).

10. The construction element according to any one of the claims 1 to 9, **characterized in that** the diameter (Dₘ) of the mantle (2) is at least a fivefold of the diameter (D_{c}) of any chamber (4).

11. The construction element according to any one of the claims 1 to 10, **characterized in that** the diameter (D_{c}) of each chamber (4) is at least a fivefold of the thickness (T_{w}) of any delimitating intermediate wall (5).
